# EUROPEAN PATENT APPLICATION

(11) **EP 4 253 267 A1**
(43) Date of publication of application: **04.10.2023**
(21) Application number: 21897475.6
(22) Date of filing: 22.09.2021
(51) Int. Cl.: B65D 5/66, B65D 85/88, H01M 50/20

(54) **BATTERY PACKAGE**

(30) Priority: 30.11.2020 JP 2020197841
(71) Applicant: FDK Corporation, Tokyo 108-8212 (JP)
(72) Inventor: ITO, Takuro, Tokyo 108-8212 (JP); MUGIMA, Isao, Tokyo 108-8212 (JP); YOKOO, Daisuke, Tokyo 108-8212 (JP)
(74) Representative: Dennemeyer & Associates S.A.
(86) International application number: PCT/JP2021/034816
(87) International publication number: WO 2022/113497

(57) **Abstract**

This battery package has a paper board part formed of paper and a battery storage part formed by folding a paper, wherein: the battery storage part has a bottom portion coupled to the paper board part; three surfaces around the battery storage part are adhered to the paper board part by a sticking margin portion; and the sticking margin portion has a shape which does not overlap the paper board part in a lower corner portion of the battery package.

## Description

### Technical Field

The present disclosure relates to a battery package, and more particularly relates to a battery package formed of a single sheet of paperboard folded at multiple predetermined points to form a single unit with a mount that serves as the base and a recessed battery compartment that accommodates a battery.

### Background Art

As illustrated in FIG.1 to FIG. 5 of Patent Literature 1, for example, a conventionally known battery package is formed of a single sheet of paperboard, wherein a part of the paperboard forms back face 16 (mount), and the rest is folded back to form recessed battery compartment 24. This battery compartment 24 is placed on back face 16, and strip margins 23a and 23a extending from the side edges of battery compartment 24 are adhered to the side edge portions on the back face 16 side. Margins 23a and 23a are conventionally shaped to overlap exactly with the periphery of back face 16, which defines the outer shape of the battery package, as illustrated in FIG. 1 and FIG. 5 of Patent Literature 1.

### Citation List

### Patent Literature

PTL 1
Japanese Patent Application Laid-Open No. 2001-240049

### Summary of Invention

### Technical Problem

Incidentally, the battery package disclosed in Cited Reference 1 is provided with suspension hole 22. When this type of battery package is sold at a retail store, this suspension hole 22 is hooked to a suspension rod extending substantially horizontally from a rack for product display. Accordingly, a plurality of battery packages are lined up in the upright position under the suspension rod in the store. A user who buys the battery package displayed in this manner takes the battery package from the suspension rod. In doing so, it is not uncommon for the user to accidentally slip and drop the battery package to the floor. When the battery package containing four AA batteries is dropped in this manner, the impact at the time of hitting the floor is significant since the battery package weighs about 100 to 120 g. In addition, when a lower corner of the battery package hits the floor, the margin is also impacted and the adhesive strength decreases. When the decrease in adhesive strength is considerable, the batteries inside pop out in some cases.

Further, the conventional battery package formed of a single sheet of paperboard is manufactured in a manufacturing facility provided with an apparatus automatically folding sheets of paperboard. It is necessary to pay attention to avoid interference between the sheets of paperboard in the process of sequentially folding the sheets of paperboard. The folding process, however, may result in loose folds of the paperboard. For example, when a fold of the margin on the side edge is loose and raised during the folding process to form the battery compartment and the mount is flipped to cover the battery compartment in the following step, a corner of the margin and the mount interfere with each other, thus causing a production problem.

The present invention is provided to address such a problem, and the objective is to provide a battery package capable of mitigating damage when dropped as well as improving productivity.

### Solution to Problem

The above objective is achieved by a battery package including: a mount formed of a paper sheet; and a battery compartment formed by folding a paper sheet, wherein, the battery compartment includes a bottom coupled to the mount, three surfaces around the battery compartment are adhered to the mount by margins, and the margins have a shape so as not to overlap with the mount at a lower corner of the battery package.

The margins may be formed by being folded outside the three surfaces around the battery compartment and at least one of the margins may have a shape in which a portion corresponding to the lower corner is removed.

The margins may be formed by being folded outside the three surfaces around the battery compartment, and the mount may have a shape in which a portion corresponding to the lower corner is removed.

The margins may be formed by being folded inside the three surfaces around the battery compartment.

An angle of a portion corresponding to the lower corner is preferably in a range of 10 degrees back and forth with 45 degrees as a center.

It is preferable that the angle is 45 degrees and an isosceles triangle, which is a portion to be cut off, has a short-side length of 5 mm or longer.

### Advantageous Effects of Invention

According to a battery package of the present invention, it is possible to mitigate damage when dropped as well as to improve productivity.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a net of paperboard 1a used for battery package 1 according to an embodiment;
FIG. 2 illustrates battery package 1 with batteries BA accommodated in battery compartment 20 in a folding process;
FIG. 3 illustrates battery package 1 when sold as a product;
FIG. 4A is a diagram for describing a situation where battery package 1 is dropped;
FIG. 4B illustrates a situation where a lower corner of battery package 1A hits the floor according to a comparison example;
FIG. 5A illustrates battery package 1 being folded in manufacturing equipment;
FIG. 5B illustrates battery package 1A being folded in manufacturing equipment;
FIG. 6A illustrates a case in which the peripheries of margins are inside the periphery of mount 10, where a right angle shape process and a cut-off process are performed;
FIG. 6B illustrates a case in which the peripheries of margins are inside the periphery of mount 10, where the cut-off process is performed on both;
FIG. 7 illustrates a cut-off angle at the corner of a margin, which serves as the periphery; and
FIG. 8 illustrates exemplary dimensions of respective portions of paperboard 1a capable of accommodating four AA batteries.

### Description of Embodiments

Hereinafter, a preferred embodiment of the invention disclosed in the claims will be described in detail with reference to the accompanying drawings.

### (Battery Package 1)

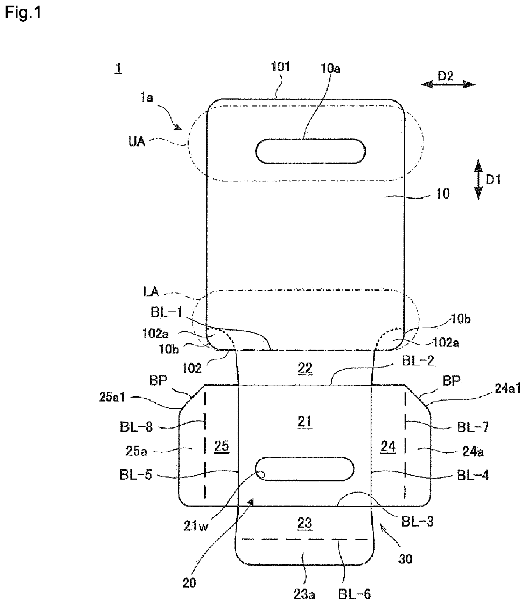

FIG. 1 is a net of paperboard 1a used for battery package 1 according to an embodiment. FIG. 1 illustrates a flat piece of paperboard 1a designed in a predetermined shape, the upper side of paperboard 1a is to be mount 10, which will be described later, and the lower side of paperboard 1a is to be battery compartment 20, which will also be described later. Note that no limitation is applied to paperboard 1a adopted here, and a widely supplied paperboard 1a (coated cardboard) can be adopted.

### (Paperboard 1a)

Paperboard 1a is a single sheet of plate (flat) paper that is punched out from coated cardboard and formed into a predetermined shape. Coated cardboard is a coated material made of thick paper, such as cardboard, as the core material, with a polypropylene coating (thickness of approximately 0.02 to 0.05 mm) applied to both sides of the paper.

Forming paperboard 1a using coated cardboard increases the elasticity, which makes battery package 1 produced by obtaining a folding process more resistant to crushing, and enhances the water resistance, thereby improving the strength of battery package 1. In addition, battery package 1 is less likely to get dirt, and even when dirt gets on battery package 1, it can be easily wiped off.

Note that the material of paperboard 1a is not limited to coated cardboard and may be any material that is tough enough to be folded into a shape that can accommodate batteries and that can be bonded using an adhesive, for example, plate plastic, metal, aluminum, paper similar to coated cardboard, or the like.

When paperboard 1a is coated cardboard or paper similar to coated cardboard, a nonflammable adhesive containing no organic solvent that may ignite, or a water-soluble adhesive with excellent recyclability can be used as the adhesive.

The paper similar to coated cardboard includes a vulcanized fiber material, a three-layer sheet material composed of a vulcanized fiber material put between pieces of thick paper, a material with a synthetic resin coating (e.g., polypropylene) applied to the above material, or the like.

Note that the use of coated cardboard or paper similar to coated cardboard as paperboard 1a facilitates the incineration of paperboard 1a, improves the processability of paperboard 1a, and reduces the environmental burden.

The weight that battery package 1 should have varies depending on the size and the number of batteries to be accommodated. To be more specific, the weight that battery package 1 should have varies depending on the type of battery, the size of battery, the number of batteries, and the like. For example, the total weight of four AA batteries is about 100 to 120 g, and it is preferable to adopt paperboard having a basis weight of 200 to 500g/m2 for stably holding the weight.

Mount 10 and battery compartment 20 are connected with first fold line BL-1 as a border. Thus, when first fold line BL-1 is folded and either mount 10 or battery compartment 20 is raised and flipped, it can lay on top of the other. Battery compartment 20 is configured to include front 21, lower wall 22, upper wall 23, right wall 24, and left wall 25.

Second fold line BL-2, third fold line BL-3, fourth fold line BL-4, and fifth fold line BL-5 are respectively configured between front 21 and each of lower wall 22, upper wall 23, right wall 24, and left wall 25. Folding along these fold lines and raising all walls form a recessed space with front 21 as a bottom surface, and predetermined batteries (e.g., four AA batteries) can be accommodated in the recessed space. Note that, when battery package 1 finally becomes a product by being folded and accommodating batteries, it is displayed and sold in a posture in which mount 10 is upright (upright posture). Thus, side wall 22 on the upper side of FIG. 1 is a lower wall. In addition, long horizontal window 21w is formed in a central portion of front 21 so that batteries inside can be checked.

Paperboard 1a includes a first area, a second area adjacent to a lower side of the first area, and a third area provided around the second area. Mount 10 is provided in the first area, battery compartment 20 is provided in the second area, and adhesive portion 30 is provided in the third area.

### (Mount 10)

Mount 10 is a covering portion that covers a bottomed recess accommodating batteries by being adhered to adhesive portion 30 with an adhesive. Details of adhesive portion 30 will be described later. Mount 10 is formed in a substantially quadrangular shape.

Suspension hole 10a is formed in area UA near upper end 101 of mount 10. For example, a suspension rod extending substantially horizontally from a rack for product display is inserted into suspension hole 10a.

### (Non-Adhesive Portions 102a)

Two non-adhesive portions 102a are provided in area LA near lower end 102 of mount 10. Non-adhesive portions 102a are provided in area LA near the corners of mount 10. When adhesive portion 30 is adhered to mount 10, non-adhesive portions 102a are provided around adhesive portion 30 with no adhesive applied (without being glued). Non-adhesive portions 102a reduce the impact on adhesive portion 30, thereby preventing detachment at the adhesive point between adhesive portion 30 and mount 10.

### (Curves 10b)

Mount 10 has arc-shaped curves 10b. To be more specific, curves 10b are respectively formed on both sides of lower end 102 of mount 10. Curves 10b are arc-shaped corners of lower end 102 of mount 10, and curves 10b are also part of adhesive portion 30.

### (Battery Compartment 20)

Battery compartment 20 has a bottom coupled to mount 10 and is a portion that accommodates batteries. The bottom coupled to mount 10 corresponds to lower wall 22. Battery compartment 20 includes front 21, lower wall 22, upper wall 23, right wall 24, and left wall 25. A bottomed recess is formed by folding lower wall 22, upper wall 23, right wall 24, and left wall 25 at 90 degrees to front 21. Batteries can be accommodated in the recess.

### (Front 21)

The width of front 21 in vertical direction D1 is set substantially equal to the length of a battery accommodated in battery compartment 20. The width of front 21 in horizontal direction D2 is set substantially equal to the total width of a plurality of batteries accommodated in battery compartment 20 in the array direction.

Front 21 is formed with long horizontal window 21w. Window 21w allows checking of batteries accommodated in battery compartment 20, thereby preventing battery package 1 from being shipped with no battery accommodated in battery compartment 20.

### (Lower Wall 22)

Lower wall 22 is provided between front 21 and mount 10 integrally with each of front 21 and mount 10.

The width of lower wall 22 in vertical direction D1 is set substantially equal to the thickness of a battery accommodated in battery compartment 20. The width of lower wall 22 in horizontal direction D2 is set substantially equal to the total width of a plurality of batteries accommodated in battery compartment 20 in the array direction.

Lower wall 22 is folded using second fold line BL-2 as a border to face a first electrode (e.g., negative electrode) of a battery placed between mount 10 and front 21. Details of second fold line BL-2 will be described later.

### (First Fold Line BL-1)

First fold line BL-1 is provided at a border between lower wall 22 and mount 10. First fold line BL-1 is a lead line, a pressed line, a cut line, a perforation line, etc. which is formed so that mount 10 can be easily folded when mount 10 is folded to lower wall 22.

### (Second Fold Line BL-2)

Second fold line BL-2 is provided at a border between lower wall 22 and front 21. Second fold line BL-2 is a lead line, a pressed line, a cut line, a perforation line, etc. which is formed so that lower wall 22 can be easily folded when lower wall 22 is folded to front 21.

### (Upper Wall 23)

Upper wall 23 is provided integrally with front 21 on the side opposite to the lower wall 22 side of front 21. The widths of upper wall 23 in vertical direction D1 and horizontal direction D2 are set to the same dimensions as those of lower wall 22. Upper wall 23 is folded using third fold line BL-3 as a border to face a second electrode (e.g., positive electrode) of a battery placed between mount 10 and front 21.

### (Third Fold Line BL-3)

Third fold line BL-3 is provided at a border between upper wall 23 and front 21. Third fold line BL-3 is a lead line, a pressed line, a cut line, a perforation line, etc. which is formed so that upper wall 23 can be easily folded when upper wall 23 is folded to front 21.

### (Right Wall 24)

Right wall 24 is provided on the right side of front 21 integrally with front 21. The width of right wall 24 in vertical direction D1 is set substantially equal to the length of a battery accommodated in battery compartment 20. The width of right wall 24 in horizontal direction D2 is set substantially equal to the thickness of a battery accommodated in battery compartment 20. Right wall 24 is folded using fourth fold line BL-4 as a border so as to face a cylindrical portion (side surface of battery) of a battery placed between mount 10 and front 21.

### (Fourth Fold Line BL-4)

Fourth fold line BL-4 is provided at a border between right wall 24 and front 21. Fourth fold line BL-4 is a lead line, a pressed line, a cut line, a perforation line, etc. which is formed so that right wall 24 can be easily folded when right wall 24 is folded to front 21.

### (Left Wall 25)

Left wall 25 is provided on the left side of front 21 integrally with front 21. The widths of left wall 25 in vertical direction D1 and horizontal direction D2 are set to the same dimensions as those of right wall 24. Left wall 25 is folded using fifth fold line BL-5 as a border to face a cylindrical portion of a battery placed between mount 10 and front 21.

### (Fifth Fold Line BL-5)

Fifth fold line BL-5 is provided at a border between left wall 25 and front 21. Fifth fold line BL-5 is a lead line, a pressed line, a cut line, a perforation line, etc. which is formed so that left wall 25 can be easily folded when left wall 25 is folded to front 21.

A recessed space with front 21 as a bottom surface can be formed by folding lower wall 22, upper wall 23, right wall 24, and left wall 25 along these fold lines and raising all the walls with respect to front 21. Four predetermined batteries (e.g., AA batteries) can be accommodated in the recess.

Note that the type of battery that can be accommodated in the recess is not limited to the AA battery and may be the AAA battery, for example. In addition, the number of batteries that can be accommodated in the recess is not limited to four and may be any number depending on the specification of paperboard 1a, the specification of an adhesive, the adhesive areas of respective margins, and the like.

Note that, when battery package 1 finally becomes a product by being folded and accommodating batteries, it is displayed and sold in a posture in which mount 10 is upright (upright posture). Thus, the wall on the upper side of front 21 in FIG. 1 is lower wall 22. In addition, long horizontal window 21w is formed in a central portion of front 21 so that batteries inside can be checked.

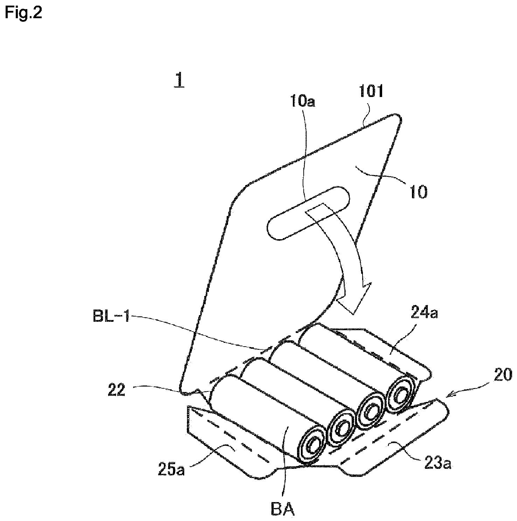

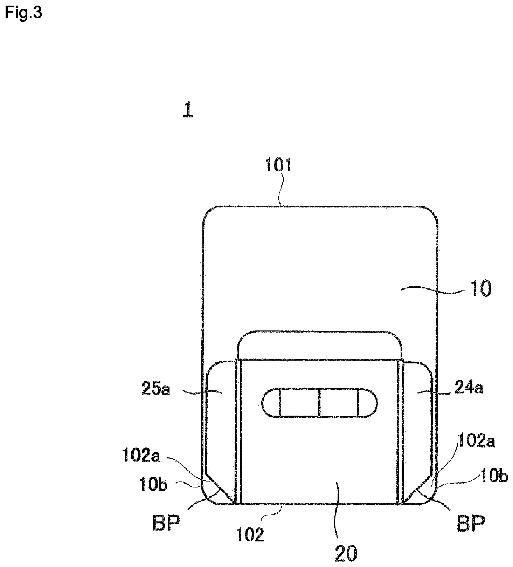

Upper margin 23a, right margin 24a, and left margin 25a are provided by being respectively extended from the peripheries of upper wall 23, right wall 24, and left wall 25 described above. Thus, as illustrated in FIG. 2, batteries BA are accommodated in battery compartment 20, an adhesive is applied to each of the margins (upper margin 23a, right margin 24a, and left margin 25a), and upper margin 23a, right margin 24a, and left margin 25a are attached to the corresponding positions on the mount 10 side. This results in battery package 1 as a product to be sold in the upright posture illustrated in FIG. 3.

Note that battery package 1 formed by folding the above-described paperboard at predetermined points may be manufactured by manually folding paperboard 1a, or may be consecutively produced by manufacturing equipment with a predetermined folding function.

### (Adhesive Portion 30)

Adhesive portion 30 is a margin to which an adhesive is applied. Adhesive portion 30 includes upper margin 23a, right margin 24a, and left margin 25a.

### (Upper Margin 23a)

Upper margin 23a is provided integrally with upper wall 23 on the side opposite to the front 21 side of upper wall 23.

### (Sixth Fold Line BL-6)

Sixth fold line BL-6 is provided at a border between upper wall 23 and upper margin 23a. Sixth fold line BL-6 is a lead line, a pressed line, a cut line, a perforation line, etc. which is formed so that upper margin 23a can be easily folded when upper margin 23a is folded to upper wall 23.

Upper margin 23a is folded using sixth fold line BL-6 as a border in a direction opposite to the direction in which upper wall 23 is folded to front 21.

### (Right Margin 24a)

Right margin 24a is provided integrally with right wall 24 on the side opposite to the front 21 side of right wall 24.

### (Seventh Fold Line BL-7)

Seventh fold line BL-7 is provided at a border between right wall 24 and right margin 24a. Seventh fold line BL-7 is a lead line, a pressed line, a cut line, a perforation line, etc. which is formed so that right margin 24a can be easily folded when right margin 24a is folded to right wall 24.

Right margin 24a is folded using seventh fold line BL-7 as a border in a direction opposite to the direction in which right wall 24 is folded to front 21.

### (Inclined Portion 24a1)

Right margin 24a is formed with inclined portion 24a1. Inclined portion 24a1 is formed at the edge of right margin 24a on the mount 10 side and is inclined at a predetermined angle of inclination with respect to the extension of second fold line BL-2. Details of the inclination angle will be described later. Inclined portion 24a1 is a portion of the periphery of right margin 24a that is set back (offset) from lower end 102 of mount 10 to the center side of mount 10 when battery package 1 is formed by folding paperboard 1a (set-back portion BP). Details of set-back portion BP will be described later.

### (Left Margin 25a)

Left margin 25a is provided integrally with left wall 25 on the side opposite to the front 21 side of left wall 25.

### (Eighth Fold Line BL-8)

Eighth fold line BL-8 is provided at a border between left wall 25 and left margin 25a. Eighth fold line BL-8 is a lead line, a pressed line, a cut line, a perforation line, etc. which is formed so that left margin 25a can be easily folded when left margin 25a is folded to left wall 25.

Left margin 25a is folded using eighth fold line BL-8 as a border in a direction opposite to the direction in which left wall 25 is folded to front 21.

### (Inclined Portion 25a1)

Left margin 25a is formed with inclined portion 25a1. Inclined portion 25a1 is formed at the edge of inclined portion 25a1 on the mount 10 side and is inclined at a predetermined angle of inclination with respect to the extension of second fold line BL-2. Inclined portion 25a1 is a portion of the periphery of left margin 25a that is set back (offset) from lower end 102 of mount 10 to the center side of mount 10 when battery package 1 is formed by folding paperboard 1a (set-back portion BP).

As illustrated in FIG. 2, after batteries BA are accommodated in battery compartment 20, upper margin 23a, right margin 24a, and left margin 25a are respectively folded in directions opposite to the directions in which upper wall 23, right wall 24, and left wall 25 are folded.

Then, a glue (adhesive) is applied to each of upper margin 23a, right margin 24a, and left margin 25a. After the adhesive is applied, mount 10 is folded so as to face each of upper margin 23a, right margin 24a, and left margin 25a. That is, mount 10 is folded, using first fold line BL-1 as a border, in the same direction as the direction in which lower wall 22 is folded to front 21 illustrated in FIG. 1.

Upper margin 23a, right margin 24a, and left margin 25a are then attached to mount 10. This results in battery package 1 that can be sold in the upright posture, as illustrated in FIG. 3. Further, since upper margin 23a, right margin 24a, and left margin 25a are adhered to mount 10, it is possible to prevent the batteries accommodated in battery compartment 20 from popping out of battery package 1 during transportation of battery package 1, display of battery package 1, or the like.

The upright posture corresponds to, for example, a state in which battery package 1 that is suspended from a suspension rod extending substantially horizontally from a rack for product display is hanging vertically from the suspension rod.

The upright posture may also correspond to a state in which battery package 1 is stored in a tray or the like so that lower end 102 of paperboard 1a faces the bottom of the receiving tray for packaging or display, the bottom of a box for packaging or display, or the like, and extends to the vertical direction of paperboard 1a.

Note that battery package 1 sold in the upright posture as described above may be provided with a hole for suspension (suspension hole 10a) on mount 10 and offered for sale in a form of being suspended while a horizontally extending cross bar is passed through suspension hole 10a, or may be offered for sale in the form of being stored in the upright posture on a receiving tray or in a box. That is, battery package 1 may be offered for sale suspended from the above-mentioned suspension rod, or stored in a receiving tray for packaging or display, a box for packaging or display, or the like.

As described above, when a user picks up battery package 1 at a retail store, battery package 1 may slip and drop to the floor, causing the lower corner of battery package 1 to hit the floor. Even in such a case, a configuration for mitigating damage is provided around right margin 24a and left margin 25a of battery package 1.

To reduce the damage of hitting, exemplified battery package 1 is provided with set-back portions BP on the lower side (upper side in FIG. 1) of right margin 24a and left margin 25a illustrated in FIG. 1.

As more clearly illustrated in FIG. 3, set-back portions BP are provided corresponding to the portions attached to the lower right and left corners of mount 10 of battery package 1, and are portions where the peripheries of right margin 24a and left margin 25a are set back (offset) inward from the lower periphery of mount 10. That is, set-back portions BP are portions of the edges (peripheries) of right margin 24a and left margin 25a, located on the center side of mount 10 rather than lower end 102 of mount 10.

When set-back portions BP are formed in this manner, non-adhesive portions 102a are formed on a part of the surface of mount 10. Non-adhesive portions 102a function as shock absorbers that absorb the impact energy generated when battery package 1 is dropped.

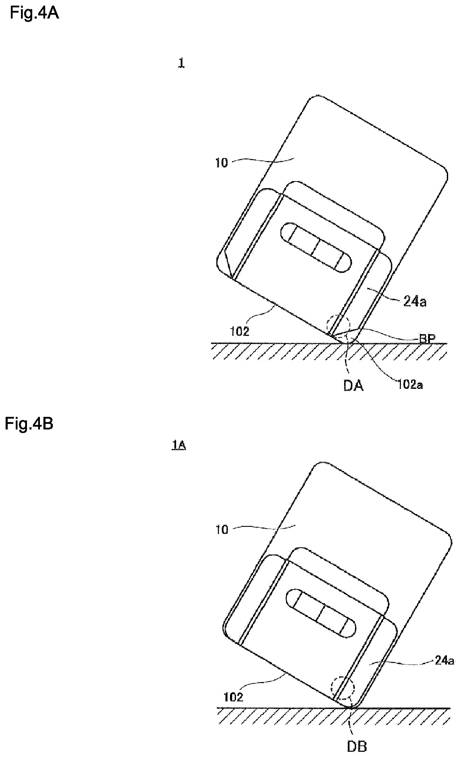

How non-adhesive portions 102a absorb the impact energy will be described with reference to FIG. 4A and FIG. 4B.

With such set-back portions BP, even when battery package 1 drops with its lower corner hitting the floor as illustrated in FIG. 4A, the corner of mount 10 deforms to absorb the impact energy, thereby reducing damage to lower end DA of the margin (right margin 24a in the drawing).

That is, when the lower corner of battery package 1 hits the floor as illustrated in FIG. 4A, non-adhesive portion 102a provided between right margin 24a and the edge of battery package 1 hits the floor and deforms. This reduces the impact energy to be transmitted to right margin 24a and prevents detachment at the adhesive point of right margin 24a.

FIG. 4B illustrates a situation where a lower corner of battery package 1A hits the floor according to a comparison example. Battery package 1A according to the comparison example illustrated in FIG. 4B is not provided with set-back portions BP. Accordingly, the edge (periphery) of right margin 24a is located to the periphery of mount 10. In this case, lower end DB of the margin receives more damage.

That is, when the lower corner of battery package 1A hits the floor, right margin 24a hits the floor and deforms. As a result, all or a part of the adhesive point of right margin 24a may be detached. In this case, batteries possibly pop out of battery package 1A.

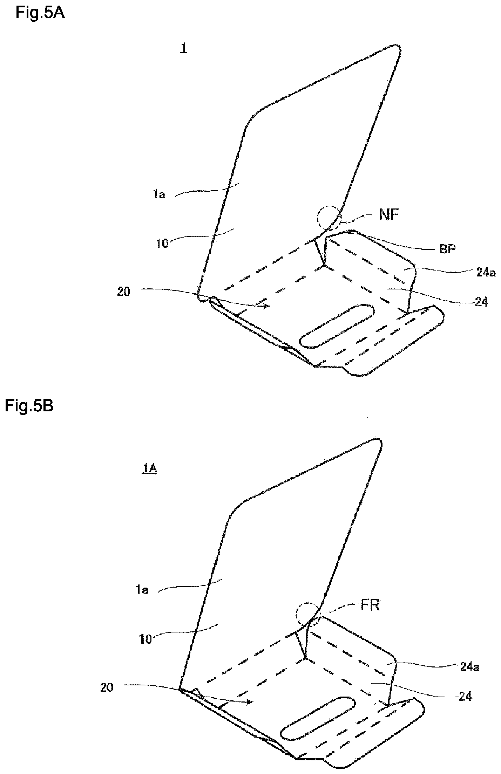

The above-described configuration in which the periphery of the margin is set back inward from the periphery of mount 10 as illustrated in FIG. 4A not only has the effect of mitigating the impact on battery package 1 when dropped, but also contributes to improved productivity. That is, battery package 1 provided with set-back portions BP makes it possible not only to prevent detachment at the adhesive point of right margin 24a, for example, but also to increase the productivity of battery package 1. Such an effect will be described with reference to FIG. 5A and FIG. 5B.

FIG. 5A illustrates battery package 1 being folded in manufacturing equipment. Batteries are not illustrated here. FIG. 5B illustrates battery package 1A being folded in manufacturing equipment.

Even using the same manufacturing equipment, a folded portion of a fold is sometimes insufficient (the fold angle is smaller than planned) due to the condition of the paperboard used, environmental changes, etc.

For example, in a case where a plurality of battery packages 1 are manufactured using manufacturing equipment, the fold width of adhesive portion 30 is sometimes insufficient due to the thickness of a material used for battery package 1A, the dimensional tolerance when paperboard 1a is punched, the ambient temperature and humidity of the manufacturing equipment, etc. In addition, the fold angle of a folded part of adhesive portion 30 is sometimes smaller than a set value.

For example, when a margin is more upright than planned in the previous process, and mount 10 is flipped and placed over the battery compartment in the next process, interference occurs during the folding process (see FR in FIG. 5B). The portion indicated by the sign FR in the drawing is a portion where mount 10 interferes with right margin 24a.

To be more specific, in a step of folding right margin 24a after folding right wall 24, the fold position of right margin 24a sometimes shifts from a set position, resulting in a higher height of right wall 24. In this case, there is a possibility that mount 10 interferes with right margin 24a during the folding process of mount 10 when mount 10 is placed over battery compartment 20.

Additionally, in the step of folding right margin 24a after folding right wall 24, the angle of right margin 24a with respect to the extension direction of right wall 24 sometimes becomes around 45 degrees due to the insufficient folding amount of right margin 24a, i.e., right margin 24 is sometimes folded nearly perpendicular. In this case, there also is a possibility that mount 10 interferes with right margin 24a.

When mount 10 is forcibly folded when interference occurs in such a manner, wrinkles and folds are caused, and battery package 1A becomes defective. Thus, it is necessary to stop the operation of the manufacturing equipment and deal with the problem (e.g., removing defective battery package 1A from the manufacturing equipment).

Meanwhile, for battery package 1 according to an embodiment of the present disclosure illustrated in FIG. 5A, the periphery of right margin 24a is set back to the center side of mount 10 from the lower end of mount 10, and thus it is possible to prevent mount 10 from interfering with right margin 24a, resulting in smooth continuation of battery package 1 production (see NF in FIG. 5A). The sign NF in the drawing indicates a portion where the interference of mount 10 with right margin 24a is avoided.

As described above, by providing set-back portions BP in battery package 1, above-described battery package 1 can be expected to improve the productivity of battery package 1.

The form of the margin in battery package 1 illustrated in FIGS. 1, 2, and 3 is an example where the lower right and left corners of mount 10 are rounded (sometimes referred to as "R-chamfered") and the corners serving as the peripheries of the margins are cut off (sometimes referred to as "C-chamfered"), causing the peripheries of the margins to be set back inward from the periphery of mount 10, but the example of the form of setting back need not be limited to this.

The rounding process is to form curve 10b on the periphery of the corner of lower end 102 of mount 10. The cutting-off process is to form inclined portion 24a1 in right margin 24a and also to form inclined portion 25a1 in left margin 25a.

The rounding process and the cutting-off process may include, for example, not only a method of cutting a part of paperboard 1a but also a method of configuring a mold for punching paperboard 1a from coated cardboard to a predetermined shape and punching the coated cardboard using the mold.

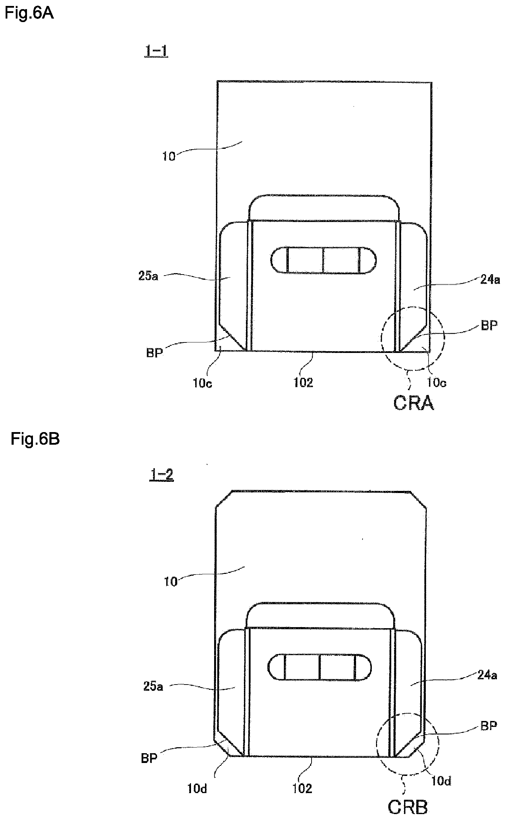

That is, for mount 10 with a periphery processed into a right-angle shape as illustrated in circle CRA of FIG. 6A, the corners serving as the peripheries of the margins may be cut off so that the peripheries of the margins set back inward from the periphery of mount 10.

FIG. 6A illustrates the first variation of battery package 1 according to an embodiment of the present disclosure. Battery package 1-1 according to the first variation is formed with right-angle portion 10c in a section surrounded by circle CRA in FIG. 6A.

Right-angle portion 10c is a portion that is processed so that the periphery of the corner of mount 10 at lower end 102 is at a right angle. Right margin 24a is formed with inclined portion 24a1 described above, and left margin 25a is formed with inclined portion 25a1. Accordingly, the peripheries of right margin 24a and left margin 25a are set back from lower end 102 of mount 10, so that battery package 1-1 is provided with set-back portions BP.

Further, the peripheries of the margins may be set back inward from the periphery of mount 10 by cutting off the corners of the margins, which serve as the peripheries, deeper than mount 10 having the periphery cut off as illustrated in circle CRB in FIG. 6B.

FIG. 6B illustrates the second variation of battery package 1 according to an embodiment of the present disclosure. Battery package 1-2 according to the second variation is formed with inclined portion 10d in a section surrounded by circle CRB in FIG. 6B.

Inclined portion 10d is formed at the corner of mount 10 at lower end 102 and is inclined at a predetermined angle with respect to lower end 102. Right margin 24a is formed with inclined portion 24a1, and left margin 25a is formed with inclined portion 25a1.

In this case, the positions of inclined portion 24a1 and inclined portion 25a1 are respectively configured to be set back from two inclined portions 10d of mount 10 to the center side of mount 10. This allows battery package 1-2 to be provided with set-back portions BP.

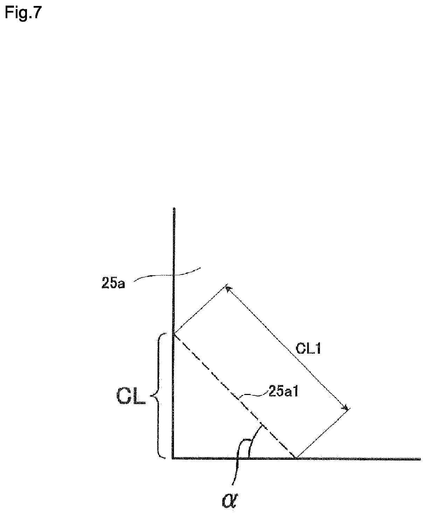

Note that the inclination angle of the margins (inclined portion 24a1 and inclined portion 25a1) is set as follows. Here, the inclination angle of inclined portion 25a1 will be described. The inclination angle of inclined portion 24a1 may be set the same as the inclination angle of inclined portion 25a1, or may be set to an angle different from the inclination angle of inclined portion 25a1, and the description thereof will be omitted. When cutting off the corner of a margin, which serves as the periphery, cut-off angle α is preferably set in a range of 10 degrees back and forth with 45 degrees as a center, as illustrated in FIG. 7.

When cut-off angle α is greater than 55 degrees, the area of left margin 25a is relatively small, which causes a problem of reduced adhesive strength.

When cut-off angle α is smaller than 35 degrees, the position of inclined portion 25a1 of left margin 25a is closer to the position of the peripheral surface of mount 10 at lower end 102, thereby causing the area of non-adhesive portion 102a to be smaller. This reduces the absorption of impact energy by non-adhesive portion 102a, causing a problem of detachment due to the impact at the time of dropping.

Meanwhile, when cut-off angle α is smaller than 35 degrees, the position of inclined portion 25a1 of left margin 25a is closer to the position of the peripheral surface of mount 10 at lower end 102, thereby causing the area of non-adhesive portion 102a to be smaller. This reduces the absorption of impact energy by non-adhesive portion 102a, possibly causing detachment of left margin 25a.

Here, in a case where cut-off angle α is set to 45 degrees, the shape of a portion cut off from left margin 25a is an isosceles triangle when the corner of left margin 25a is a right angle. Length CL of the short side of this isosceles triangle is preferably 5 mm or longer. When length CL is 5 mm or longer, length CL1 of inclined portion 25a1 is preferably 7 mm or longer. For example, when length CL of the short side is 11 mm, length CL1 of inclined portion 25a1 is 16 mm.

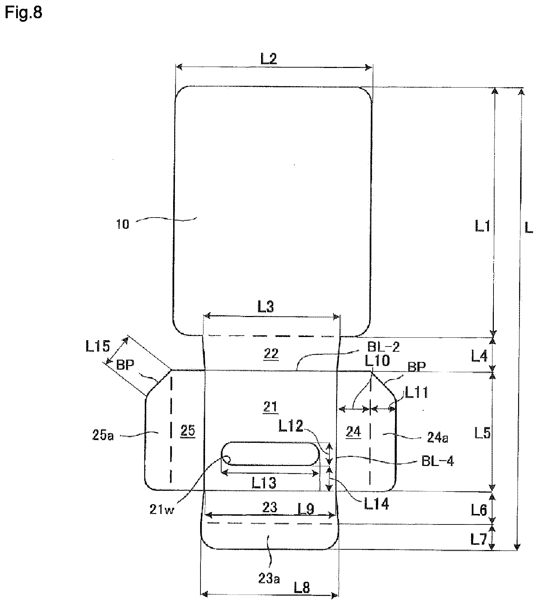

FIG. 8 illustrates exemplary dimensions of respective components of paperboard 1a capable of accommodating four AA batteries. The dimensions from L to L15 illustrated in FIG. 8 can be exemplified as follows. Note that the values in parentheses below represent the dimensions of paperboard 1a formed to be capable of accommodating four AAA batteries instead of four AA batteries.
L: 199.0 mm (186.1 mm)
L1: 108.0 mm
L2: 85.5 mm
L3: 59.9 mm (44.4 mm)
L4: 14.8 mm (10.9 mm)
L5: 51.6 mm (45.6 mm)
L6: 14.5 mm (10.6 mm)
L7: 11.0 mm
L8: 59.8 mm (44.4 mm)
L9: 57.3 mm
L10: 14.6 mm
L11: 11.0 mm
L12: 10.0 mm (9.0 mm)
L13: 42.5 mm (30.5 mm)
L14: 10.0 mm (9.0 mm)
L15: 7.0 mm

Note that battery package 1, 1-1, or 1-2 described above includes margins formed by being folded outside three surfaces around battery compartment 20 and have a shape in which portions corresponding to the lower corners are removed, but the following configuration may also be applied. The three surfaces around battery compartment 20 include upper margin 23a, right margin 24a, and left margin 25a.

### (Battery Package according to the Third Variation)

A battery package according to the third variation includes margins formed by being folded outside three surfaces around battery compartment 20 and mount 10 having a shape in which portions corresponding to the lower corners are removed.

To be more specific, instead of respectively forming set-back portions BP on right margin 24a and left margin 25a illustrated in FIG. 1, the lower corners on both sides of mount 10 illustrated in FIG. 1 are processed to be inclined at a predetermined angle of inclination with respect to the extension of second fold line BL-2.

This allows the inclined portions formed on mount 10 to set back (offset) from the lower ends of right margin 24a and left margin 25a respectively to the center side of mount 10 when the battery package is formed by folding paperboard 1a. Accordingly, a non-adhesive portion is formed on a part of each of right margin 24a and left margin 25a.

This non-adhesive portion functions as a shock absorber that absorbs the impact energy generated when the battery package is dropped. Thus, as is the case with battery package 1 illustrated in FIG. 4A, when the lower corner of the battery package according to the third variation hits the floor, a portion to which no adhesive is applied of the entire area of right margin 24a hits the floor and deforms. This reduces the impact energy to be transmitted to a part of entire right margin 24a to which an adhesive is applied (adhesive point) and prevents detachment at the adhesive point.

### (Battery Package according to the Fourth Variation)

A battery package according to the fourth variation includes margins formed by being folded inside three surfaces around battery compartment 20 and mount 10 having a shape in which portions corresponding to the lower corners are not removed.

To be more specific, the lower corners on both sides of mount 10 are formed in an arc shape or a right angle shape without being cut off. Right margin 24a and left margin 25 may be each formed with set-back portion BP illustrated in FIG. 1 or need not be formed with set-back portion BP.

When the battery package is formed by folding paperboard 1a, right margin 24a is folded, using seventh fold line BL-7 as the border, in the same direction as the direction in which right wall 24 is folded to front 21. Left margin 25a is folded, using eighth fold line BL-8 as a border, in the same direction as the direction in which left wall 25 is folded to front 21.

Accordingly, the lower ends of right wall 24 and left margin 25a are respectively set back (offset) from the lower corners on both sides of mount 10 to the center side of mount 10. This forms portions that do not overlap with the margins at the lower corners of mount 10.

These portions function as shock absorbers that absorb the impact energy generated when the battery package is dropped. Thus, as is the case with battery package 1 illustrated in FIG. 4A, when the lower corner of the battery package according to the fourth variation hits the floor, the lower corner of mount 10 hits the floor and deforms. This reduces the impact energy to be transmitted to a part of entire right margin 24a to which an adhesive is applied (adhesive point) and prevents detachment at the adhesive point.

In the following, descriptions will be given of the adhesive strength of battery package 1 illustrated in FIGS. 1, 2, and 3 when actually manufactured and drop tests are performed on battery package 1, and the folding results when production tests of battery package 1 are performed in actual manufacturing equipment.

### <Drop Test>

Here are the confirmed results when battery package 1 was freely dropped from a height of 75 cm onto a concrete floor in a posture in which the corner of battery package 1 hits the floor (see FIG. 4).
1) In a case of C chamfering with cut-off angle α of 45 degrees: non-adhesive portion 102a formed around the periphery of mount 10 suffered significant damage when dropped, which mitigated the damage to a margin (e.g., right margin 24a). This confirmed the improved resistance of battery package 1 to drops.
2) In a case of C chamfering with cut-off angle α of 60 degrees: although the damage to non-adhesive portion 102a when dropped was smaller than that in the case of cut-off angle α of 45 degrees, the improved resistance of battery package 1 to drops was still confirmed even in this case.
3) R chamfering: the periphery of the margin was similarly R-chamfered in correspondence with the periphery of mount 10 forming the outer shape. It was confirmed that the margin was directly damaged at the time of dropping, resulting in a significant decrease in adhesive strength.

### <Production Test>

In the folding process in the manufacturing equipment, when the angle of a fold of the margin was small and less than 45 degrees (e.g., the angle of right margin 24a to right wall 24 was less than 45 degrees), mount 10 interfered with the margin when being flipped to cover the margin in the case where the corner of the margin was rounded (R-chamfered).

Meanwhile, in the case where the corner of the margin was cut off (C-chamfered), mount 10 did not interfere with the margin and it was possible to fold mount 10 even when a fold of the margin (the angle of the fold of the margin) was about 30 degrees, which was even smaller.

Note that, in the case where the corner of the periphery of the margin is rounded as described above, the periphery of the margin can be set back from the periphery of mount 10 as compared with the case where the corner is formed into a right angle. The set-back amount (offset amount), however, is small in such a case, and thus it is preferable that the corner of the periphery of the margin is sufficiently set back by the cut-off process.

As described above, a battery package according to the present embodiment includes: a mount formed of a paper sheet; and a battery compartment formed by folding the paper sheet, wherein, the battery compartment includes a bottom coupled to the mount, three surfaces around the battery compartment are adhered to the mount by margins, and the margins have a shape so as not to overlap with the mount at a lower corner of the battery package.

With this configuration, the portion provided around the margin absorbs the impact energy when the battery package is dropped, thereby preventing detachment at the adhesive point. This prevents the margin from coming off from the mount, and thus it is possible to prevent batteries stored in the compartment from popping out of the battery package.

In addition, the margin has a shape so as not to overlap with the mount at the lower corner of the battery package, which allows the margin or the mount to easily deform compared with the case where the margin and the mount overlap each other at the lower corner of the battery package, thereby enhancing the impact absorption effect.

Note that it is understood that the following aspects, for example, are also included in the technical scope of the present disclosure.
1) A battery package according to an embodiment of the present disclosure includes: a mount formed of a paper sheet; and a battery compartment formed by folding the paper sheet, wherein, the battery compartment includes a bottom coupled to the mount, three surfaces around the battery compartment are adhered to the mount by margins, and the margins have a shape so as not to overlap with the mount at a lower corner of the battery package.
2) The margins are formed by being folded outside the three surfaces around the battery compartment and at least one of the margins has a shape in which a portion corresponding to the lower corner is removed.
3) The margins are formed by being folded outside the three surfaces around the battery compartment, and the mount has a shape in which a portion corresponding to the lower corner is removed.
4) The margins are formed by being folded inside the three surfaces around the battery compartment.
5) An angle of a portion corresponding to the lower corner is in a range of 10 degrees back and forth with 45 degrees as a center.
6) The angle is 45 degrees and an isosceles triangle, which is a portion to be cut off, has a short-side length of 5 mm or longer.

Although a preferred embodiment of the present invention has been described above, it is needless to say that the present invention is not limited to the above-described embodiment and can be implemented with various changes in any aspects included in the concept and claims of the present invention.

The disclosure of Japanese Patent Application No. 2020-197841, filed on November 30, 2020, including the specification, drawings, and abstract, is incorporated herein by reference in its entirety.

### Reference Signs List

1 Battery package
1A Battery package
1-1 Battery package
1-2 Battery package
1a Paperboard
10 Mount
10a Suspension hole
10b Curve
10c Right-angle portion
10d Inclined portion
20 Battery compartment
21 Front
21w Window
22 Lower wall
23 Upper wall
23a Upper margin
24 Right wall
24a Right margin
24a1 Inclined portion
25 Left wall of battery compartment
25a Left margin
25a1 Inclined portion
30 Adhesive portion
101 Upper end
102 Lower end
102a Non-adhesive portion
D1 Vertical direction
D2 Horizontal direction
UA Area
LA Area
BA Battery
BL-1 First fold line
BL-2 Second fold line
BL-3 Third fold line
BL-4 Fourth fold line
BL-5 Fifth fold line
BL-6 Sixth fold line
BL-7 Seventh fold line
BL-8 Eighth fold line
BP Set-back portion
CL Length
CL1 Length
α Cut-off angle

## Claims

1. A battery package, comprising:
a mount formed of a paper sheet; and
a battery compartment formed by folding a paper sheet, wherein,
the battery compartment includes a bottom coupled to the mount,
three surfaces around the battery compartment are adhered to the mount by margins, and
the margins have a shape so as not to overlap with the mount at a lower corner of the battery package.

2. The battery package according to claim 1, wherein the margins are formed by being folded outside the three surfaces around the battery compartment and at least one of the margins has a shape in which a portion corresponding to the lower corner is removed.

3. The battery package according to claim 1, wherein,
the margins are formed by being folded outside the three surfaces around the battery compartment, and
the mount has a shape in which a portion corresponding to the lower corner is removed.

4. The battery package according to claim 1, wherein the margins are formed by being folded inside the three surfaces around the battery compartment.

5. The battery package according to claim 1, wherein an angle of a portion corresponding to the lower corner is in a range of 10 degrees back and forth with 45 degrees as a center.

6. The battery package according to claim 5, wherein the angle is 45 degrees and an isosceles triangle, which is a portion to be cut off, has a short-side length of 5 mm or longer.
